# EUROPEAN PATENT APPLICATION

(11) **EP 0 848 530 A2**
(43) Date of publication of application: **17.06.1998**
(21) Application number: 97309709.0
(22) Date of filing: 02.12.1997
(51) Int. Cl.: H04M 1/27

(54) **Speech recognition function**

(30) Priority: 16.12.1996 US 766121; 16.12.1996 US 766120; 16.12.1996 US 767043
(71) Applicant: NCR International, Inc., Dayton, Ohio 45479 (US)
(72) Inventor: Peters, Daniel V., Lisle, IL 60532 (US); Harms, David C., West Chigaco, IL 60185 (US); Owen, Julie M., Broomfield, CO 80020 (US)
(74) Representative: Irish, Vivien Elizabeth

(57) **Abstract**

An integrated computer-telephone system includes a personal computer [141] and a plurality of telephone sets [104A....104N]. Each of the telephone sets is connected to an adapter [202A....202N], and to a telephone network [106] via a telephone line. The personal computer controls the telephone sets via control [318] and communication [316] channels that do not interfere with regular signal transmission between the telephone sets and the telephone network. When coupled to the communication channel each of the telephone sets is able to send a speech command to the personal computer to invoke [602,604] a specific operational feature of the system. The personal computer interprets the speech command and generates corresponding control commands for the operational feature. Via the control channel the personal computer sends the control commands to the adapters that are connected to the telephone sets and controls the operation of the telephone sets. The speech command can be the name of a person, the computer identifies the person, retrieves the telephone number from store [506] and dials the number. The speech command can be an intercom command.

## Description

The present invention relates to communication system control apparatus and more particularly to the techniques available to a user to operate such control apparatus.

Modern telephone equipment provides many facilities which are accessible by operating controls on a telephone instrument, such controls are usually push-buttons although dials are still in use. To access such facilities users frequently have to remember numerous groups of numbers or sequences of actions which have to be keyed or dialed into the instrument to generate control signals.

It is an object of the present invention to improve the ease with which a user can operate a communication device to achieve a required response.

According to the invention there is provided communication system control apparatus characterized in that the apparatus includes means for coupling to a communication device of the system and means to exercise control of system operation in response to a speech command to the device.

The apparatus may include a converter circuit responsive to a speech command to convert the speech command to a command signal and a processing unit to recognize the speech command in the command signal and generate the corresponding control signal. The speech command is exemplified by a specific number to be dialed, the identity of a person or organisation or location to which telephonic connection is required and an activity required of the communication device, such as a telephone instrument, or connected equipment.

The apparatus can be incorporated in a home (or a small office) telephone communication system utilising the capabilities in existing telephone equipment and existing phone wiring and may form part of a telephone communication system. A personal computer may be included in the home or small office system as part of a Personal Computer Interactive Phone System (PCIP). The apparatus is effective without interfering with regular operation of the existing telephone system.

Increasingly many homes may have one or more telephone wires and a modern PC with advanced features. With increasing performance needs and expectations on home telephone systems, more and more consumers are demanding that the telephone system have more intelligence and processing capabilities at an affordable price. Thus the applicant has realised there is a large market potential to use modern PC's processing power to provide a home telephone with advanced home telephony features, including:
1) caller ID announcement based on caller ID record.
2) voice activated auto-dial,
3) PC resident message centre access from any PCIP equipped phone,
4) routing of incoming calls to specific phones in the home,
5) in-house intercom with no additional wiring of the home,
6) screening of incoming messages from any PCIP equipped phones
7) home convenience package including list maker and scheduler,
8) speech recognition by using the PCIP system.

The apparatus to exercise control through a communication device by speech command can be standalone or incorporated into an improved system such as is described in co-pending Applications (NCR dockets 6791.10, 6791.20, 6792.00, 6743.00 and 6743.10) incorporated herein by reference.

Applicant has also realized that the feasibility to achieve such market potential greatly relies on an effective design of an integrated computer-telephone system:
(1) that has a low cost,
(2) that is flexible to form a specific telephone system for a household,
(3) that is adaptable to existing telecommunication technology,
(4) that is adaptable to consumer's existing telephone equipment and house wiring,
(5) that is simple to install, and
(6) that does not interfere with regular operation of existing home telephone system.

To provide the features initiated by users, it is possible to design hard ware circuitry and interface that are able to convert users' activation of electromechanical components into control signals. The program that performs the features are then invoked by these control signals. However, such an approach entails extra hardware cost and does not make full use of the processing capability of a PC. Furthermore, it is not always convenient for a user to operate a PC as part of a telephone system.

A particular aspect of the present application relates to the intercom feature, which can be part of the PCIP system, but which could also be a standalone product. It is known that home intercom technology exists but is not common because of limited capabilities and certain expenses, for example, additional wiring. However, the PCIP with Home Intercom solution has the following advantages over the existing technology:
1. Reduced cost due to re-use of customer's existing facilities: telephone sets, wires to extension phone locations, and modern Personal Computer (PC). Furthermore, while the PCIP adapter boxes, the PCIP Link add-in board, and PCIP software are not particularly inexpensive, these are re-used as part of a full featured phone system for the home and small office (see PCIP feature list above).
2. Ease of use, especially as enabled by speech recognition software residing on the PC. Consider that the user simply presses a button on the PCIP adapter box beside the extension phone, then speaks into the handset "Intercom to kitchen", then the kitchen phone's adapter box generates a distinctive ring sound associated with intercom use.
3. Intercom call routing. Typical intercom systems would not have call routing. Consider a small office that only had extension phone type of wiring. PCIP with Intercom would allow the caller to ring a specific phone, duplicating a capability found only with PBX equipment and point to point wiring.
4. High quality audio is not always typical of intercom equipment. PCIP with Intercom achieves telephone quality audio by re-using telephone sets as part of the intercom and full duplex, high frequency communication channels.
5. Broadcast option. PCIP with Intercom allows the user to either ring a specific phone or to broadcast a message to the speakers included in each PCIP adapter box. For example, if the caller did not know where the callee was located, the caller might broadcast a message the could be heard throughout the residence.
6. Simple installation. Owners of modern PC's are typically encouraged to install add-in boards and software by themselves. Thus, it is expected that the user can install this intercom system without professional help. The user would also need to install a connectorized PCIP adapter box in series with each extension phone (of those that are to be converted). There is no additional wiring involved.

The intercom feature provides independent and simultaneous intercom and telephone calls in a home environment (or small office environment).

The present invention provides an apparatus for performing auto dialing for a first communication device to a second communication device. The apparatus includes:
(a) an interface circuit coupled to the first communication device, including:
   (1) a converter circuit for converting an oral dialing command, received from the first communication device, into a command signal;
   (2) a transmitter circuit for sending said command signal; and
(b) a controller, including:
   (1) a receiver circuit for receiving said command signal; and
   (2) a processing unit for generating a dialing signal associating with said second communication device in response to said command signal.

In another aspect, the present invention provides a system for generating a dialing command for a plurality of local communication devices to a plurality of remote communication devices. The system includes:
(a) a plurality of interface circuits, with each of said interface circuits being coupled to its respective local communication device, each of said interface circuits including:
   (1) a converter circuit for converting an oral dialing command, received from the first communication device, into a command signal;
   (2) a transmitter circuit for sending said command signal; and
(b) a controller, including:
   (1) a receiver circuit for receiving said command signal; and
   (2) a processing unit for generating a dialing signal associating with said second communication device, in response to said command signal, to dial one of the remote communication devices.

In another aspect, the present invention provides an apparatus for performing an intercom connection between a first communication device and a second communication device. The apparatus comprises:
(a) an interface circuit coupled to the first communication device, including:
   (1) a converter circuit for converting an oral intercom command, received from the first communication device, to a command signal;
   (2) a transmitter circuit for sending said command signal; and
(b) a communication controller, including:
   (1) a receiver circuit for receiving said command signal; and
   (2) a processing unit for connecting the first communication device to the second communication device in response to said command signal, so that the first and second communication devices can communicate with each other.

In another aspect, the present invention provides a system for performing an intercom among a plurality of communication devices. The system comprises:
(a) a plurality of interface circuits, with each of said interface circuits being coupled to its respective local communication device, each of said interface circuits including:
   (1) a converter circuit for converting an oral intercom command, received from one of the communication devices, to a command signal;
   (2) a transmitter circuit for sending said command signal; and
(b) a communication controller, including:
   (1) a receiver circuit for receiving said command signal;
   (2) a processing unit for selecting another one of the communication devices in response to said command signal, and for connecting said one communication device with said another one communication device, so that said one communication device and said another one communication device can communicate with each other.

The present invention also provides respective methods corresponding to the aspects mentioned above.

Embodiments of the invention will now be described with reference to the accompanying drawings, in which:
Figure 1 is a block diagram of a PC interactive phone (PCIP) system, in accordance with the present invention;
Figure 2 shows house wiring of a telephone line and installation scheme for the PC interactive phone (PCIP) system shown in figure 1, in accordance with the present invention;
Figure 3 (including 3A and 3B) shows the PC interactive phone (PCIP) system of figure 1 in greater detail, in accordance with the present invention;
Figure 4 shows the user panel of figure 3 in greater detail;
Figure 5 shows a PC computer that can be used to control the operation of the PCIP system of figure 1, in accordance with the present invention;
Figure 6 shows the programs stored in memory storage and disk storage in figure 5;
Figure 7 shows a flowchart illustrating the steps for a user to execute an auto-dial operation, which provides a convenient means of voice initiated, auto-dialing using the PC and the PCIP equipment, in accordance with the present invention; and
Figure 8 shows a flowchart illustrating the steps for a user to execute an auto-dial record operation, which provides a means to add new entries into Name/Number directory 614, in accordance with the present invention.
Figure 9 shows a flowchart illustrating the steps for a user to execute an intercom operation, which provides a convenient mechanism of voice initiated intercom using the PC and the PCIP equipment, in accordance with one embodiment of the present invention; and
Figure 10 shows a flowchart illustrating the steps for a user to execute an broadcast intercom operation, which provides a convenient mechanism of voice initiated intercom using the PC and the PCIP equipment, in accordance with one embodiment of the present invention.

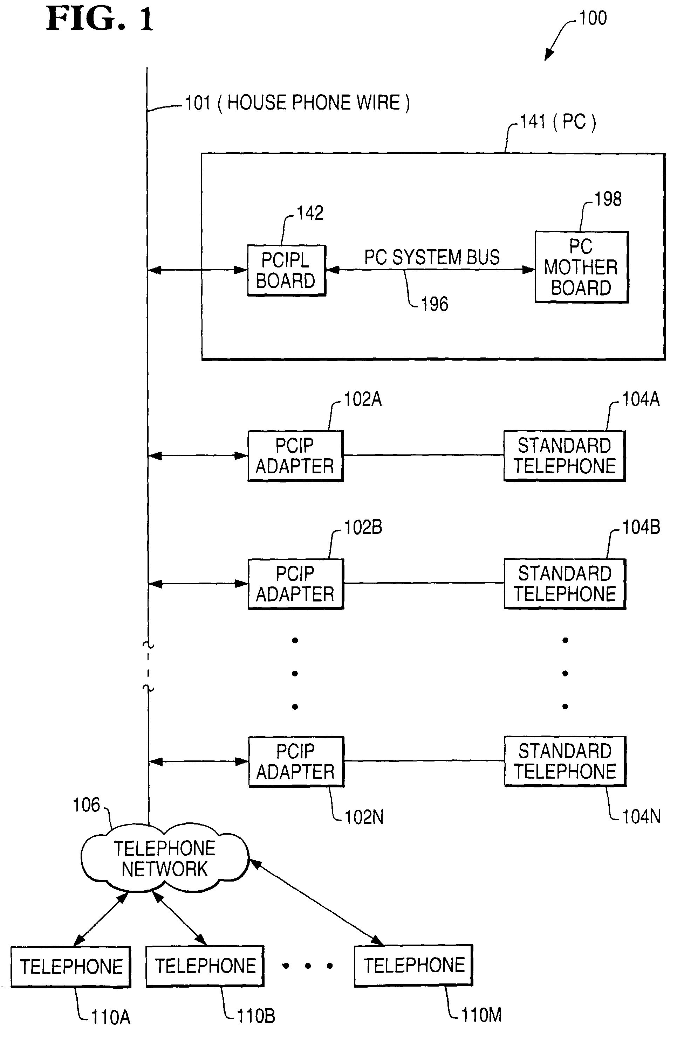

Referring to figure 1, there is shown a block diagram of a PC interactive phone (PCIP) system, in accordance with the present invention.

The PC interactive phone system includes a house telephone line 101, a PC 141, a plurality of telephone sets (identified as 104A, 104B, ..., 104N), and a plurality of PCIP adapter (identified as 102A, 102B, ..., 102N). Each of the telephone sets is coupled to its respective PCIP adapter (PCIPA). These telephone sets can be standard ones without any advanced features. Via telephone network 106, each of telephone sets 104A, 104B, ..., 104N can communicate with telephone sets 110A, 110B, ..., or 110M.

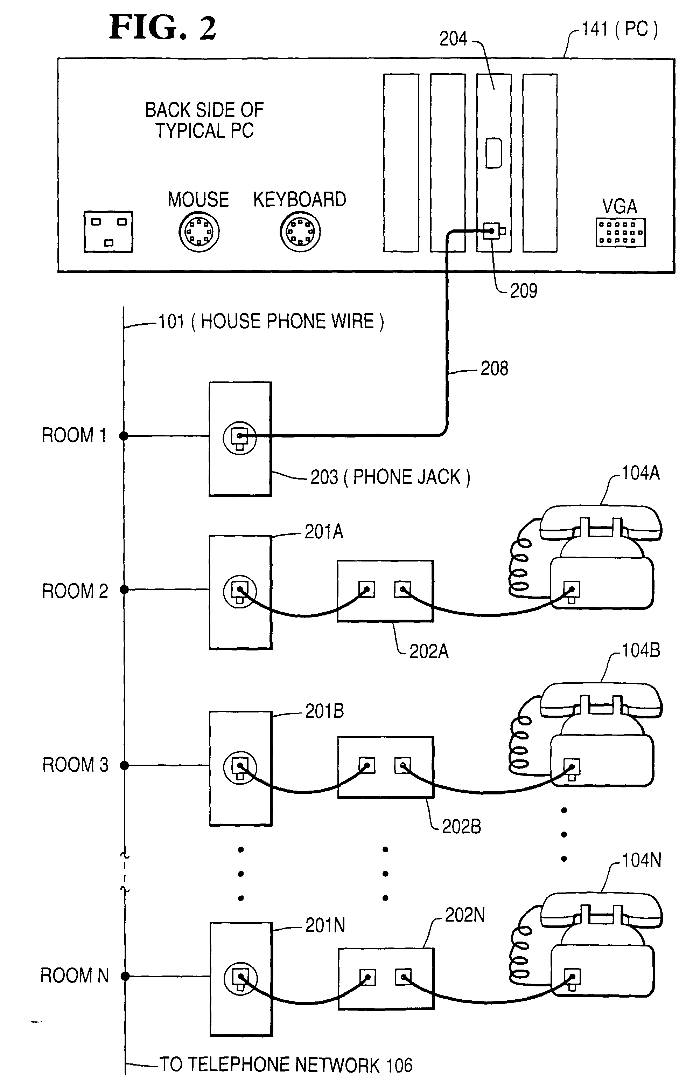

As shown in figure 1, PC 141 includes a PC mother board 198 and an add-in PCIP link (PCIPL) board 142. Other detailed aspects of a typical PC are not described here because they are known to the people in the art. PCIPL board 142 is coupled to PC mother board 198 via PC system bus 196. An example of a typical modern system bus is the PCI local bus. The PCIPL board and plurality of PCIP adapters are coupled to house telephone line 101.
Referring to figure 2, there is shown house wiring of telephone line 101 and installation scheme for the PC interactive phone (PCIP) system shown in figure 1, in accordance with the present invention.

As shown in figure 2, PC 141 has a slot 204, generally allowing access for miscellaneous PC add-in boards, into which PCIPL board 142 is inserted.

Telephone line 101 is wired into rooms 1-N, where telephone jacks 203, 201A, 201B, ..., 201N are installed respectively.

Via connector 209 and a connectorized telephone wire 208, PCIPL board 142 is coupled to telephone jack 203.

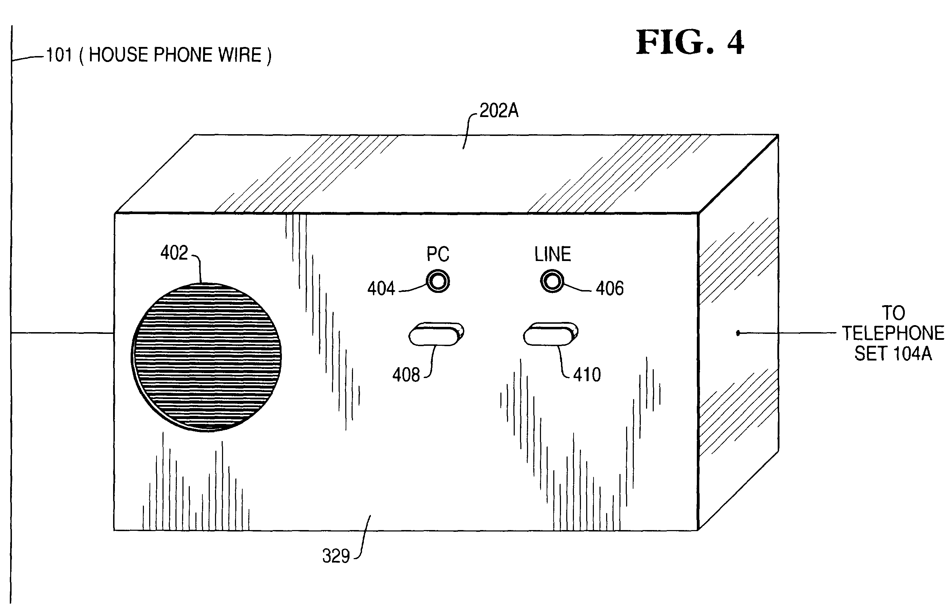

A plurality of adapter boxes (202A, 202B, ..., 202N) are coupled to telephone jacks 201A, 201B, ..., 201N, respectively. The telephone sets (104A, 104B, ..., 104N) are coupled to adapter boxes 202A, 202B, ..., 202N, respectively. Installed within adapter boxes 202A, 202B, ..., 202N are PCIP adapters 102A, 102B, ..., 102N, respectively. Each of the adapter boxes has a user panel which is depicted in figure 4 in greater detail.

To users, the system consists of just a few elements, some of which they would already have. Figure 2 shows how simply these elements are interconnected.

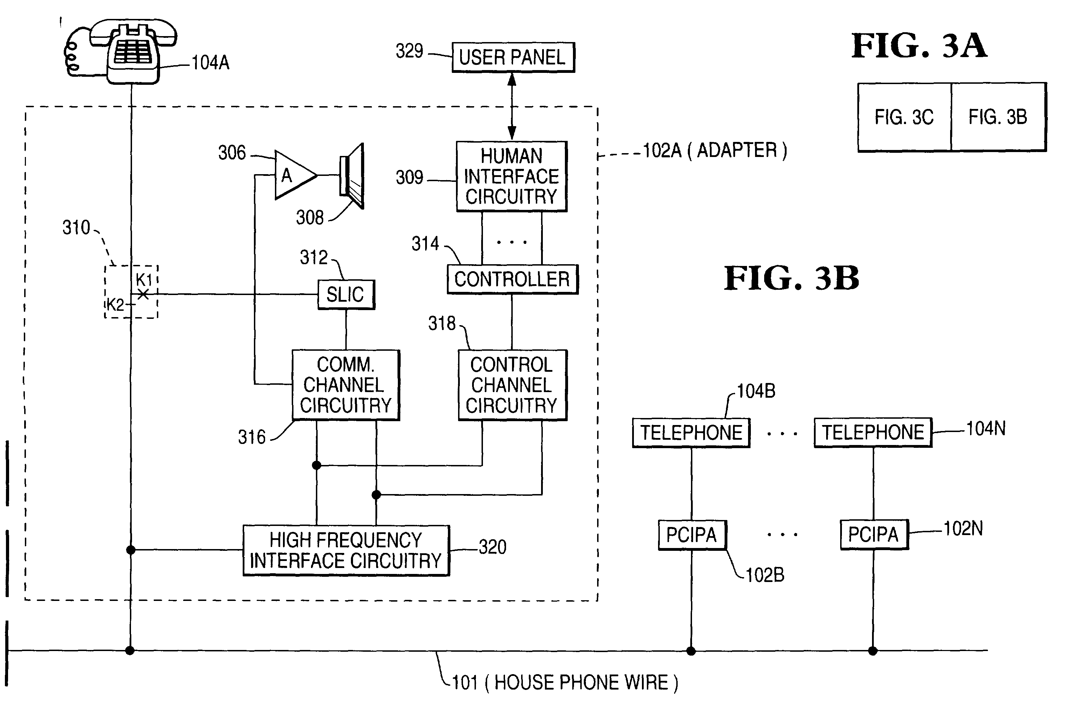

Referring to figure 3A (including 3B and 3C), there is shown an embodiment of the PC interactive phone (PCIP) system of figure 1 in greater detail, in accordance with the present invention.

Depicted in figure 3B as a representative of the pluralities of PCIP adapters (102A, 102B, ..., 102N), PCIP adapter 102A includes an amplifier 306, a speaker 308, a human interface circuitry 309, a relay 310, a subscriber loop interface (SLIC) 312, a controller 314, a communication channel circuitry 316, a control channel circuitry 318, and a high frequency interface circuitry 320. Coupled to human interface circuitry 309 is a user panel 329.

Speaker 308, coupled to communication channel circuitry 316 via amplifier 106, is able to project audio to PCIP adapter locations in the home as needed by the PCIP system.

SLIC 312, coupled between communications channel circuitry 316 and telephone 104A via K1 switch located within relay 310, is able to power telephone set 104A, to detect off-hook condition for telephone set 104A, to adjust the proper bias and amplitude to send audio signal to and receive audio signal from telephone set 104A, to adjust the proper bias and amplitude to send audio signal to and receive audio signal from the communications channel circuitry 316, and to convert a 4-wire-send-and-receive signaling arrangement on the communications channel side to a 2-wire-send-and-receive signaling arrangement that is appropriate to a telephone set. The off-hook detect capability within the SLIC is used by the PCIP system to initiate a "listen" response whenever a telephone handset gets picked up. Modern SLIC circuits are highly integrated devices that can be purchased from a number of suppliers.

Relay 310 is able to connect telephone 104A either to the PCIPA circuits, or to the telephone line by bypassing adapter 102A.

Human interface circuitry 309, coupled to controller 314, is able to generate currents to light the LEDs on user panel 329 in response to control signals from controller 314, and to generate service request signals to controller 314 in response to activations of the function buttons on user panel 329.

In adapter 102A, as an embodiment, communication channel circuitry 316, coupled to SLIC 312, can include two high frequency communication channels: a high frequency transmitter and a high frequency receiver. The high frequency transmitter combines low frequency audio from SLIC 312 with a high frequency carrier that can be coupled onto the home telephone wires in a non-interfering manner using the high frequency interface circuitry 320. The high frequency receiver recovers low frequency audio from a high frequency carrier on the house telephone wires and sends it either to SLIC 312 or to speaker 306 and amplifier 308, depending on control signals communicated through controller 314. The two high frequency communication channels are mainly used as a full duplex audio (e.g., simultaneous audio transmission and reception) channel to another adapter, or to PC 141 (via the two communication channels located within PCIPL board 142). Depending on the various operating modes of the PCIP system, these two frequencies are re-configurable to the either transmitter or receiver functions under control of PCIPA controller 314.

Control channel circuitry 318 can encode and decode binary sequences using a third high frequency carrier (distinct from the two communication channels described in the previous paragraph). The control channel circuit is connected to the controller 314 which facilitates a multi-point network using a single carrier frequency. Controller 314 has a networking port capable of transmitting and receiving Manchester encoded digital information, which eliminates the need for a separate clock signal. Controller 314 also uses a collision sensing and back-off algorithm that resolves contention for the network. The control channel frequency can be coupled onto the house telephone wires in a non-interfering manner using high frequency interface circuitry 320. The encode side of control channel circuit 318 converts a binary "1" and "0" sequence from the controller 314 to a "carrier on" and "carrier off" sequence. The decode side of control channel 318 circuit converts a "carrier on" and "carrier off" sequence to a binary "1" and "0" sequence to be sent to controller 314.

High frequency interface circuitry 320, which connects communication channel circuitry 316 and control channel circuitry 318 to the telephone line, is able to couple high frequency carrier from circuitries 316 and 318 to telephone line 101, without interfering the normal audio band signal transmission on the telephone line. High frequency interface circuitry 320 can also receive high frequency signals from the telephone line.

Controller 314 is specialized for implementation of distributed sense and control networks. It includes a networking port, a configurable input/output port, and hardware and firmware that allow execution of simple programs for sense and control and communications protocols. The input/output port provides access to human interface circuitry 309 and it controls various communications path options within the PCIPA circuit. For example, the input/output port is able to control the states of relay 310 (energized or unenergized), to generate signals to light the LEDs on user panel 329, to detect a button activation on user panel 329, to monitor the off-hook detect signal from the SLIC, and to switch the communication channel receiver output between speaker amplifier 306 and SLIC 312. The networking port that is integrated into controller 314 allows it to send and receive control commands from PC 141, for example, to send a service request to PC 141 after a specific button on user panel 329 has been activated. Specifically, the controller networks with the PC and other PCIPA controllers using data packets across the control channel. The Manchester encode and decode circuits that generate and sense the "1" and "0" bits are also integrated into the controller. Controller 314 also has a collision detect and back-off algorithm that resolves contention and allows multi-node access to the carrier. The specific device that currently suits this application is a Lon Works Neuron chip, MC143120 available from Motorola and Toshiba.

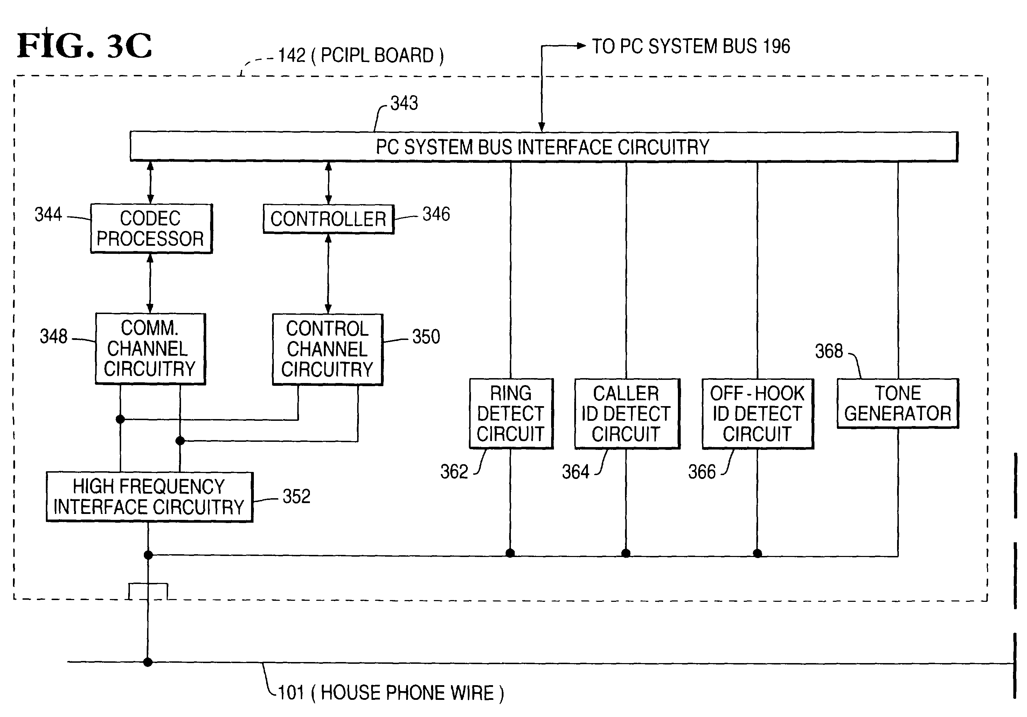

As shown in figure 3C, PCIPL board 142 includes a PC system bus interface circuitry 343, a CODEC (coder/decoder) processor 344, a controller 346, a communication channel circuitry 348, a control channel circuitry 350, a high frequency interface circuitry 352, a ring detect circuit 362, a caller ID detect circuitry 364, an off-hook detect circuit 366, and tone generator 368.

PC system bus interface circuitry 343, coupled to PC system bus 196, is able to transmit signals between PC system bus 196 and the other circuitries on PCIPL board 142.

CODEC processor 344, coupled to PC system bus interface circuitry 343, is able to convert digitally encoded audio from PC system bus 196 to analog audio and send the converted digital audio to communication channel circuitry 348. It is also able to convert analog audio from communication channel circuitry 348 to digital audio and send the converted analog audio to PC 141.

Controller 346 has similar structure and function as controller 314 described for PCIP adapter 102A. It is specialized for implementation of distributed sense and control networks. It includes a networking port, a configurable input/output port, and hardware and firmware that allow execution of simple programs for sense and control and communications protocols. The input/output port in this case connects to PC system bus interface circuit 343 and provides a parallel port for communicating with the PC circuit. The controller 346 is coupled between PC system bus interface circuitry 343 and control channel circuitry 350, and is thus able to provide network access for the PC to generate control commands to, and interpret service requests and operational reports from, the adapters (102A, 102B, ..., 102N).

On PCIPL board 142, communication channel circuitry 348 has two high frequency communication channels, which are mainly used to flexibly establish full duplex audio channels between CODEC processor 344 and the PCIP adapters (102A, 102B, ..., 102N). Only one PCIP adapter will be allowed to transmit on either of the two communication channels at any time as controlled by PCIP control program 602. The function and structure of communication channel circuitry 348 are similar to those of communication channel 316 in the above-described PCIP adapter 102A.

Control channel circuitry 350 has one channel, which is mainly used to send control commands to, and receive service requests and operational reports from, the adapters (102A, 102B, ..., 102N). The function and structure of control channel circuitry 350 are similar to those of control channel circuitry 318 in the above-described PCIP adapter 102A.

High frequency interface circuitry 352, which connects communication channel circuitry 348 and control channel circuitry 350 to telephone line 101, is able to couple the high frequency carrier from circuitries 348 and 350 to the telephone line, without interfering with the normal audio band signal transmission on the telephone line. High frequency interface circuitry 352 can also receive high frequency signals from the telephone line.

Ring detect circuit 362 is able to detect ring currents on the telephone line.

Caller ID detect circuit 364 is able to detect caller's identification information (minimally, a caller's telephone number). This information is carried between first and second ring currents of an incoming call when caller ID service has been purchased from the local phone company.

Off-hook detect circuit 366 is able to detect a change in line impedance associated with off-hook condition. Three examples of off-hook condition are:
1. any of the non-PCIP equipped telephones connected to the telephone line has the handset lifted,
2. any of the PCIP equipped telephones has the handset lifted and the relay 310 has the phone connected to the house phone wires, or
3. any other equipment on the phone line such as a FAX or answering machine "picks up" a call.

Tone generator 368 is to able to convert a telephone number to be dialed from a computer based representation, such as binary, into DTMF (dual tone multifrequency) tones that can be superimposed onto the telephone line to affect auto dialing. This circuit is related to PCIP capabilities other than Broadcast Caller ID and will not be discussed further here.

Ring detect circuit 362, Caller ID detect circuit 364, Off-hook detect circuit 366 are known to the person skilled in the art. Thus, they will not be described in greater detail. The functions of CODEC processor 344 and tone generator 368 can be flexibly programmed into various digital signal processors (DSPs) available in the industry, an example of which is DSP 1634 processor made by AT&T.

It should be noted that, in the embodiment shown in figure 3A, the three frequencies that are used to implement the communication and control channels in the PCIP system are out of the audio voice band and are in compliance with FCC rules, such that, the signaling of these three channels does not interface with normal communication and signaling on a telephone network, even when PCIP and normal telephone activities are in progress simultaneously.

Preferably, in the embodiment shown in figure 3A, 312.5 KHz and 357.1 KHz are used for two communication channels and 416.7 KHz for one control channel. These three specific frequencies are chosen because they are between 540 KHz (the bottom of the AM broadcast band) and 270 KHz (the lowest frequency that can be used for compliance to part 68 Federal Communication Commission). These three frequencies are also multiples of 10 MHz, which makes them easy to generate without RC or L tunables.

In the embodiment as shown in figure 3A, a communication channel between adapter 102A and PCIPL board 142 is formed by: PCIPA communication channel circuitry 316, PCIPA high frequency interface circuitry 320, house phone wire 101, PCIPL high frequency interface circuitry 352, PCIPL communication channel circuitry 348. A control channel between adapter 102A and PCIPL board 142 is formed by: PCIPA control channel circuitry 318, PCIPA high frequency interface circuitry 320, house phone wire 101, PCIPL high frequency interface circuitry 352, PCIPL control channel circuitry 350.

Unlike the conventional telephone communication system, the present invention uses two communication channels to achieve full duplex audio. In the conventional telephone communication, one set of wires achieves full duplex audio by using a hybrid transformer that separates transmitting from receiving in a telephone set. However, the method used in the conventional telephone communication is not feasible when audio is modulated in an out of voice band carrier, because, if both ends of a communication channel used the same carrier, the result would be scrambled unrecoverable carrier.

In addition, unlike the conventional telephone communication system where a telephone office is usually either in audio transmission mode or in controlling mode (such as on-hook or off-hook signaling), the features provided by the adapters and PCIPL board 342 sometimes need to process audio transmission and control signals at the same time when multiple telephone sets connected to the telephone lines are in use at the same time. Thus, in adapter 102A and PCIPL board 142, the communication channels are separated from the control channel.

In the embodiment shown in figure 3A, the existing house telephone wiring is used as transmission medium for the three high frequency channels between the adapter 102A and PCIPL board 142. However, other transmission media can be used to implement these three channels, such as wireless or power line carrier.

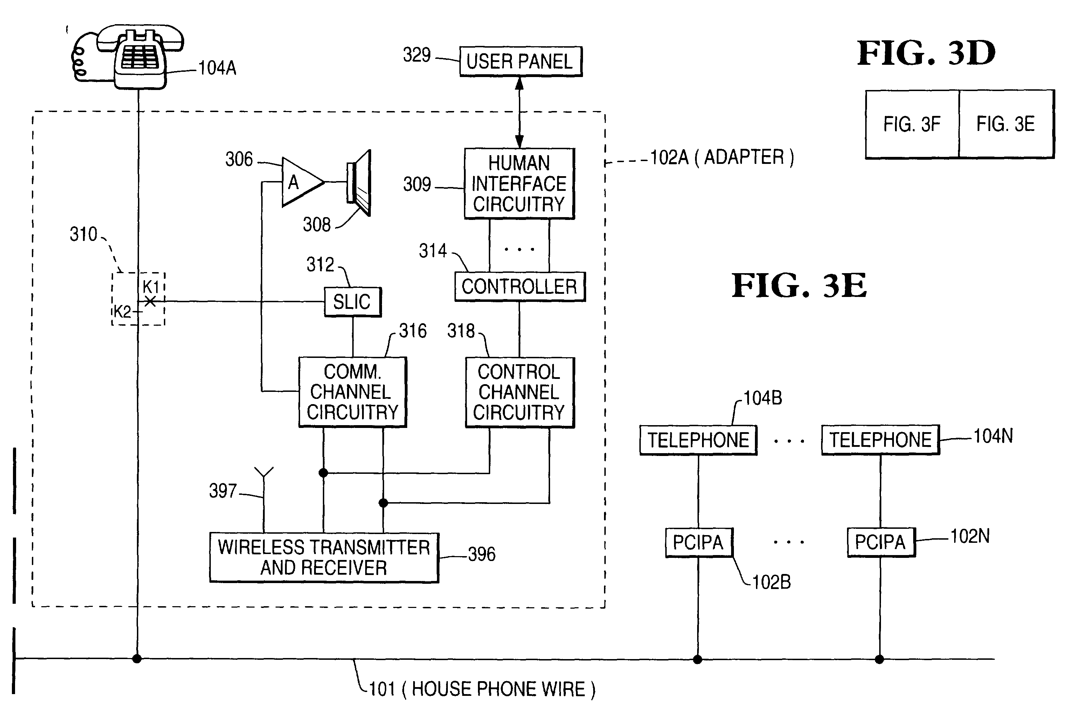

Referring to figure 3D (including 3E and 3F), there is shown another embodiment of the PC interactive phone (PCIP) system of figure 1 in greater detail, in accordance with the present invention.

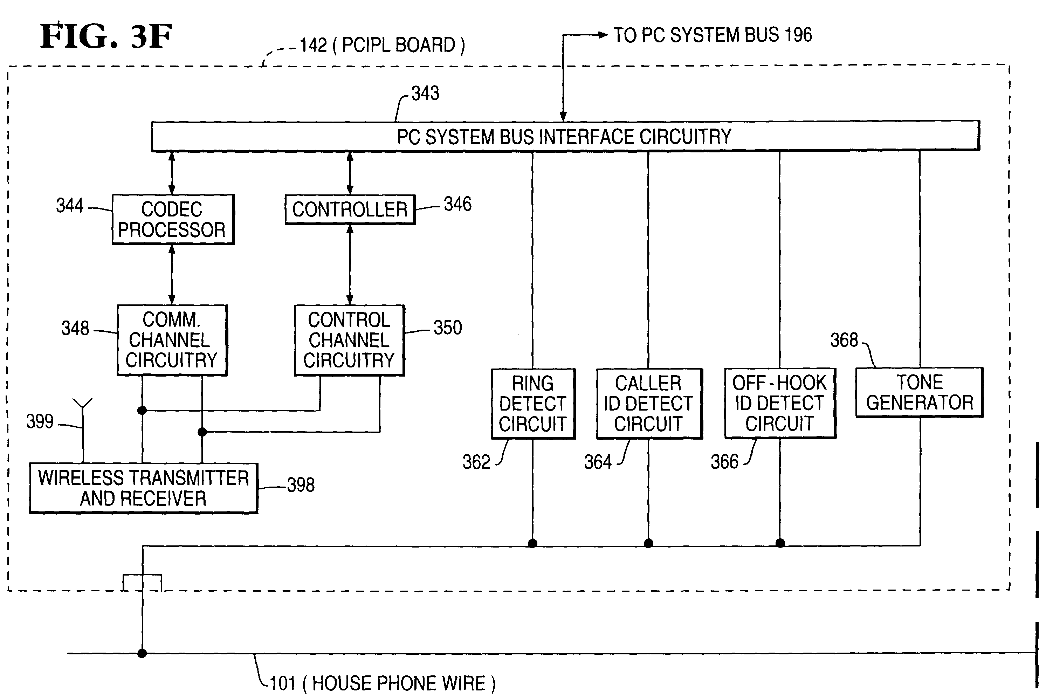

Figure 3E has the similar structure to that as shown in figure 3B, except that in figure 3E high frequency interface circuitry 320 of figure 3B is replaced by wireless communication interface circuitry 396, which includes an antenna 397. Figure 3F has the similar structure to that shown in figure 3C, except that in figure 3F high frequency interface circuitry 352 of figure 3B is replaced by wireless communication interface circuitry 398, which includes an antenna 399. Thus, in figure 3D, only PCIPA wireless communication interface circuitry 396 and PCIPL wireless communication interface circuitry 398 will be further described.

Wireless communication interface circuitry 396 (or 398) is able to implement a duplex communication link using two frequencies between any two PCIPAs or between one PCIPA and the PCIPL, and is able to implement a multipoint control channel on a third frequency. The communication link technology is common in the industry, as in cordless phone technology. However, specific control must be exerted to prevent more than one transmitter at a time on one frequency. The multi-point control link is implemented as a single frequency that is modulated "on" or "off" for Manchester encoded signaling by any of the PCIPL or PCIPA circuits. Multi-point networking is possible because each PCIPL and PCIPA circuit implements a collision detect and back-off algorithm as in the wired approach.

In the embodiment as shown in figure 3D, the communication between adapter 102A and PCIPL board 142 is through wireless carrier, instead of house telephone line 101. In figure 3D, a communication channel between adapter 102A and PCIPL board 142 is formed by: PCIPA communication channel circuitry 316, PCIPA wireless communication interface circuitry 396, PCIPL wireless communication interface circuitry 398, PCIPL communication channel circuitry 348. A control channel between adapter 102A and PCIPL board 142 is formed by: PCIPA control channel circuitry 318, PCIPA wireless communication interface circuitry 396, PCIPL wireless communication interface circuitry 398, PCIPL control channel circuitry 350. Like PCIP adapter 102A, each of the other PCIP adapters (102B, ..., 102N) also has a communication channel and a control channel to PCIPL board 142.

Referring to figure 4, there is shown user panel 329 (which is mounted on the front of adapter box 202A) in greater detail, in accordance with the present invention.

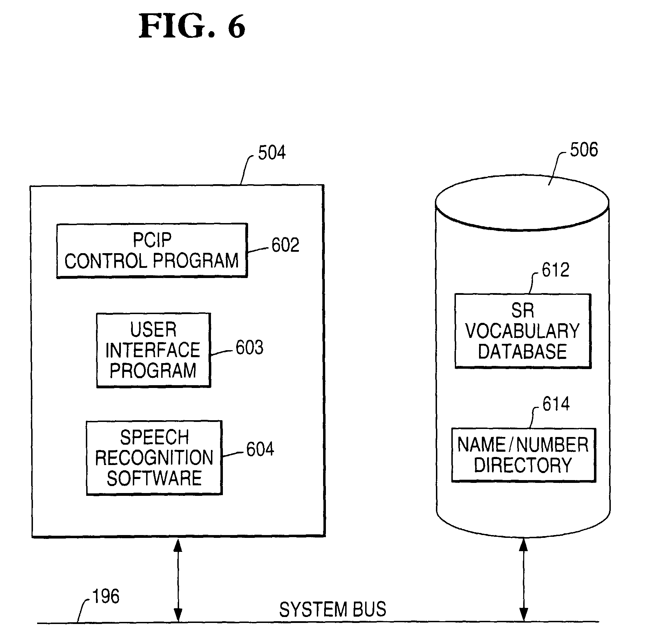

As shown in figure 4, user panel 329 includes a speaker opening 402, two LEDs (404, 406), and two buttons (408, 410). LED 404, which is associated with the label "PC" and button 408, indicates whether a communications link has been established between the attached telephone set and PCIP speech recognition software 604 (see figure 6) at PC 141, as would be the typical case after pressing button 408. LED 406, which is associated with the label "LINE" and button 410, indicates whether telephone set 104A is directly connected to telephone line 101, as would be the typical case after pressing button 410.

In the idle state, PC 141 is on; PCIPL board 142 is active; and relay 310 connects telephone set 104A to SLIC 312; so that when picking up the handset of telephone set 104A, LED 404 typically turns on and a user can speak service request to PC 141 immediately without speaking over a dialtone sound. By pressing button 410, the user can over-ride the default condition, which causes relay 310 to connect telephone set 104A to the telephone line directly and enables the user to dial a telephone number manually. Relay 310 is controlled by PCIP control program 602 (see figure 6) and the firmware in controller 314, which are responsive to button pushes, off-hook conditions, system state, and resource availability, such as availability of the audio communication channels. Some functions of PCIP control program 602 are distributed such that some control is in the various PCIP adapters (e.g. 102A-N). If PC 141 is turned off or otherwise not responding, controller 314 will control relay 310 to directly connect telephone set 104A to telephone line 101 formed by: PCIPA control channel circuitry 318, PCIPA wireless communication interface circuitry 396, PCIPL wireless communication interface circuitry 398, PCIPL control channel circuitry 350. Like PCIP adapter 102A, each of the other PCIP adapters (102B, ..., 102N) also has a communication channel and a control channel to PCIPL board 142.

Referring to figure 4, there is shown user panel 329 (which is mounted on the front of adapter box 202A) in greater detail, in accordance with the present invention.

As shown in figure 4, user panel 329 includes a speaker opening 402, two LEDs (404, 406), and two buttons (408, 410). LED 404, which is associated with the label "PC" and button 408, indicates whether a communications link has been established between the attached telephone set and PCIP speech recognition software 604 (see figure 6) at PC 141, as would be the typical case after pressing button 408. LED 406, which is associated with the label "LINE" and button 410, indicates whether telephone set 104A is directly connected to telephone line 101, as would be the typical case after pressing button 410.

In the idle state, PC 141 is on; PCIPL board 142 is active; and relay 310 connects telephone set 104A to SLIC 312; so that when picking up the handset of telephone set 104A, LED 404 typically turns on and a user can speak service request to PC 141 immediately without speaking over a dialtone sound. By pressing button 410, the user can over-ride the default condition, which causes relay 310 to connect telephone set 104A to the telephone line directly and enables the user to dial a telephone number manually. Relay 310 is controlled by PCIP control program 602 (see figure 6) and the firmware in controller 314, which are responsive to button pushes, off-hook conditions, system state, and resource availability, such as availability of the audio communication channels. Some functions of PCIP control program 602 are distributed such that some control is in the various PCIP adapters (e.g. 102A-N). If PC 141 is turned off or otherwise not responding, controller 314 will control relay 310 to directly connect telephone set 104A to telephone line 101.

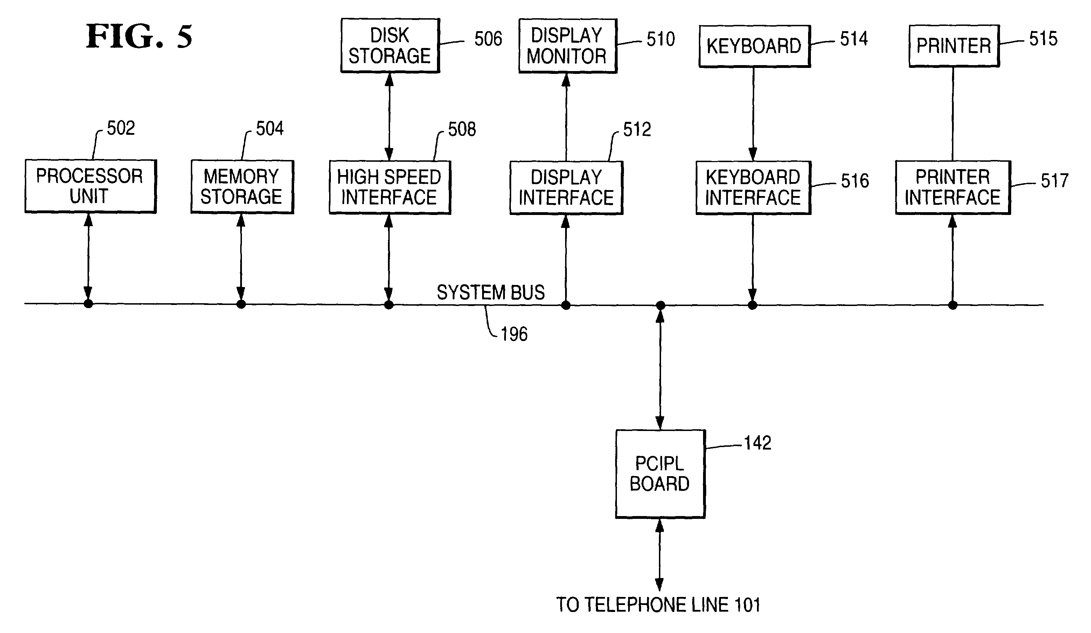

Referring to figure 5, there is shown PC computer 141 of figure 1 in greater detail, in accordance with the present invention.

As shown in figure 5, PC 141 includes a system bus 196, a processor unit 502, a memory storage 504, a disk storage 506, a high speed interface 508, a display monitor 510, a display interface 512, a keyboard 514, a keyboard interface 516, a printer 515, and a printer interface 517.

Memory storage 504, coupled to the system bus, is able to store programs that consist of instructions and data.

Disk storage 506, coupled to the system bus via high speed interface 508, is also able to store programs. However, disk storage 506 has larger memory size than memory storage 504, while memory storage 504 has faster access speed than disk storage 506. The programs stored in disk storage 506 can be down loaded to memory storage 504.

Processor unit 502, coupled to the system bus, has the access to both memory storage 504 and disk storage 506. To perform a specific task, the processor unit is able to execute the programs stored in memory storage 504. The processor unit is also able to control the over all operation of the PC computer.

Display monitor 510, coupled to the bus via display interface 512, is able to provide visual interface between a user and the PC computer.

Keyboard 514, coupled to the system bus via a keyboard interface 516, is able to provide alphabetical and numerical input to the PC computer system.

Printer 515, coupled the system bus via printer interface 517, is able to print out results.

Referring to figure 6, there is shown the executable programs stored in memory storage 504 during execution and the database files maintained in disk storage 506.

As shown in figure 6, executable programs stored in memory storage 504 include: PCIP control program 602, user interface program 603, and speech recognition software 604. Database files stored in disk storage 506 include: speech recognition (SR) vocabulary 612, and Name/Number directory and/or PCIPA location directory as appropriate 614.

PCIP control program 612 is able to maintain state information for the system and orchestrate responses to various stimulus. Stimulus's include button pushes, off-hooks, ring detect, etc. Responses include initiating database lookups, sending out control commands for establishing communication connections, etc. For example, if a PCIP adapter connected telephone has an off hook condition, control program 602 will be informed and it will send out commands on the control channel which will establish a communication channel. Furthermore, the control program will initiate speech recognition software 604 to "listen" to the appropriate communication channel. Specific examples are provided in the discussion of the flowcharts below.

Speech recognition software 604 is widely available. The PCIP system in the present invention does not require a particularly sophisticated capability. An example of an ASR application is WILDFIRE (call 800.WILDFIR for a practical demonstration and additional information). Examples of how speech recognition software 604 is used in this system are provided in the discussion of the flowcharts below.

SR Vocabulary 612 contains the digital representation of audio clips (in this case, spoken words relating to commands and names) that can be interpreted by speech recognition software 604. These digital representations are frequently referred to as wavefiles. The use of wavefile formats is common in the industry.

User interface program 603 provides a human interface via PC's display monitor 510, keyboard 514 and mouse 515. It allows a user to install, configure, and customize his/her PCIP system. This is a typical capability for PC add-in software and hardware and will not be discussed further.

The Name/Number directory 614 stores persons' names and associated telephone numbers.

PCIPA location directory 614 stores PCIP adapter's identifications (ID) and respective locations. Whenever a PCIP adapter (102A, 102B, ...., or 102N), which initiates an intercom operation, sends an information data packet to PCIPL board 142, it also sends its own PCIPA ID, together with the information packet. By mapping the ID received from the PCIP adapter into a location in PCIPA location directory 614, PCIP control program 602 can set an audio channel and a control channel for the PCIP adapter.

The databases and data in disk storage 506 can be read into memory storage 504, updated in the memory storage 504, and written back to disk storage 506.

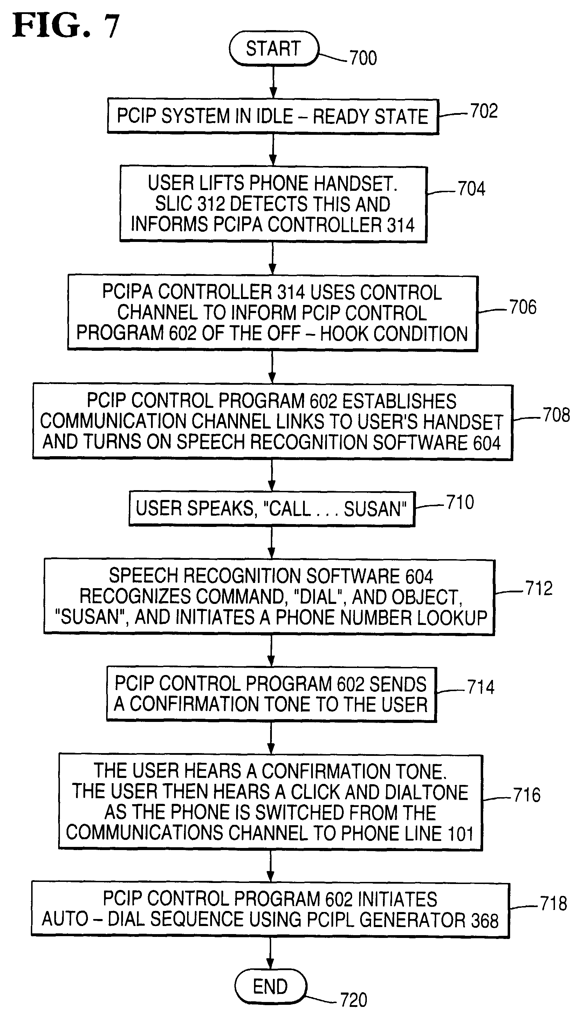

Referring to figure 7, there is shown a flowchart illustrating the steps for a user to execute an auto-dial operation, which provides a convenient mechanism of voice initiated, auto-dialing using PC 141 and the PCIP equipment, in accordance with the present invention. One simple example is provided here to describe one embodiment of the present invention, other variations are possible to the people skilled in the art. In describing the operation shown in figure 7, it is assumed that a user initiates the operation at telephone set 104A equipped with adapter 102A. The other telephone sets (104B, ..., 104N) can also be used to perform the auto-dial operation.

As shown in figure 7, in step 702 PCIP system 100 is initially in an Idle-Ready state, which means: the PC LED 404 on adapter box 202A is ON (lighted), indicating that PC 141 is on and connected to adapter 102A; PCIPL board 142 is active; relay 310 on adapter 102A is switched to SLIC 312. In this example, it is preferred that relay 310 is initially connected to SLIC 312 because the user must be able to speak commands to the PC immediately after picking up the handset of telephone 104A without speaking over a dialtone sound. Only then can SLIC 312 provide the capability of determining that the handset of telephone 104A has been lifted and that speech recognition software 604 should be initiated on the communication channel. The user always has the option of over-riding the default setting of relay 310 by pressing line button 410, which will result in a normal dialtone condition.

In step 704, the user picks up the handset of telephone 104A, and uses panel 329 on adapter box 202A to verify that the PC LED is ON so that the user knows that he/she can communicate verbally with PC 141 for PCIP related features. (On the other hand, if the user did not want to use the PCIP related features, he/she would press line button 410, see line LED 406 coming on, hear a normal dialtone, and dial the number manually.) At the PCIP adapter circuit level, when the handset is lifted, SLIC 312 detects Off-hook state and signals this state to controller 314.

In step 706, controller 314 forms an information data packet corresponding to this newly generated Off-hook condition. With the embodiment shown in figure 3A, this packet is sent from PCIPA controller 314, through: PCIPA control channel circuitry 318, PCIPA high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA controller 314, through: PCIPA control channel circuitry 318, PCIPA wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 708, after receiving the "handset change of condition" information packet associated with PCIP adapter 102A, PCIP control program 602 communicates with all PCIP adapters (102A, 102B, ..., 102N) using the control channel, to establish a single bi-directional communication channel between PCIP adapter 102A and PCIPL board 142 (other PCIP adapters, e.g. 102B, ..., 102N, in the system must have their communication channel transmitters turned off). The PCIP control program invokes speech recognition software 604, which then begins monitoring the communication channel to interpret audio to discern known audio patterns.

In step 710, after picking up the handset of telephone 104A, the user may immediately speak his/her request into the handset, for example, "Dial...Susan". (This example assumes that the prior setup activity happens quickly enough that the user does not need to be prompted). With the embodiment shown in figure 3A, this two word audio clip is sent through SLIC 312, PCIPA communication channel circuitry 316, PCIPA high frequency interface circuitry 320, house phone wire 101, PCIPL high frequency interface circuitry 352, PCIPL communication channel circuitry 348, CODEC processor 344, and to speech recognition software 604 for processing. With the embodiment shown in figure 3D, this two word audio clip is sent through SLIC 312, PCIPA communication channel circuitry 316, PCIPA wireless transmitter and receiver 396, PCIPL wireless transmitter and receiver 398, PCIPL communication channel circuitry 348, CODEC processor 344, and to speech recognition software 604 for processing.

Specifically, at PCIP adapter circuit level, SLIC 312 converts 2-Wire audio from telephone 104A of "Dial...Susan" to appropriately biased audio to send to communication channel circuitry 316. Communication channel circuitry 316 converts analog "Dial...Susan" to a high frequency modulated signal that is transmitted throughout the home on the communication channel which uses house phone wire 101 or wireless carrier.

Communication channel circuitry 348 on PCIPL board 142 recovers the "Dial...Susan" signal and converts it to analog and sends it to CODEC processor 344. The CODEC processor digitizes the audio and passes the wavefile to PC 141 over PC system bus (or PC Internal Bus) for speech recognition processing.

In step 712, after receiving the wavefile, speech recognition software 604 on PC 141 uses algorithms to recognize speech. In this case, the speech recognition software recognizes the command "Dial" as an auto-dial invocation and recognizes the lookup object "Susan". The speech recognition software does a lookup in Name/Number directory 614 and finds a valid entry.

In step 714, after a successful auto-dial lookup, an acknowledgment tone is sent to the handset of telephone 104A. To send the acknowledgment tone, PCIP control program 602 causes CODEC processor 344 on PCIPL board 142 to generate the distinctive audio tone. With the embodiment shown in figure 3A, this tone is sent through PCIPL communication channel circuitry 348, PCIPL high frequency interface circuitry 352, house phone wire 101, PCIPA high frequency interface circuitry 320, PCIPA communication channel circuitry 316, SLIC 312, and to the handset of telephone 104A. With the embodiment shown in figure 3D, this tone is sent through PCIPL communication channel circuitry 348, PCIPL wireless transmitter and receiver 398, PCIPA wireless transmitter and receiver 396, PCIPA communication channel circuitry 316, SLIC 312, and to the handset of telephone 104A.

In step 716, after an acknowledgment tone is transmitted to the user, PCIP control program 602 sends a command to switch relay 310 on PCIP adapter 102A from SLIC 312 to house phone wire 101. With the embodiment shown in figure 3A, this command is sent through: PCIPL controller 346 (where the command is converted to a network data packet), PCIPL control channel circuitry 350, PCIPL high frequency interface circuitry 352, house phone wire 101, PCIPA high frequency interface circuitry 320, PCIPA control channel circuitry 318, and to PCIPA controller 314, where the command is converted to a voltage level that controls the operation of relay 310. With the embodiment shown in figure 3D, this command is sent through: PCIPL controller 346 (where the command is converted to a network data packet), PCIPL control channel circuitry 350, PCIPL wireless transmitter and receiver 398, PCIPA wireless transmitter and receiver 396, PCIPA control channel circuitry 318, and to PCIPA controller 314, where the command is converted to a voltage level that controls the operation of relay 310.

The user hears a click as PCIPA relay 310 switches. The user then hears a normal dialtone as the Telephone Company equipment detects the resulting off-hook condition on house phone wire 101.

In step 718, after the dialtone is present on phone line 101, PCIP control program 602 causes tone generator 368 to output the correct tone sequence corresponding to Susan's telephone number onto phone line 101. The user also hears this tone sequence, and thereafter, the call proceeds in a normal manner as if the user manually dialed the call.

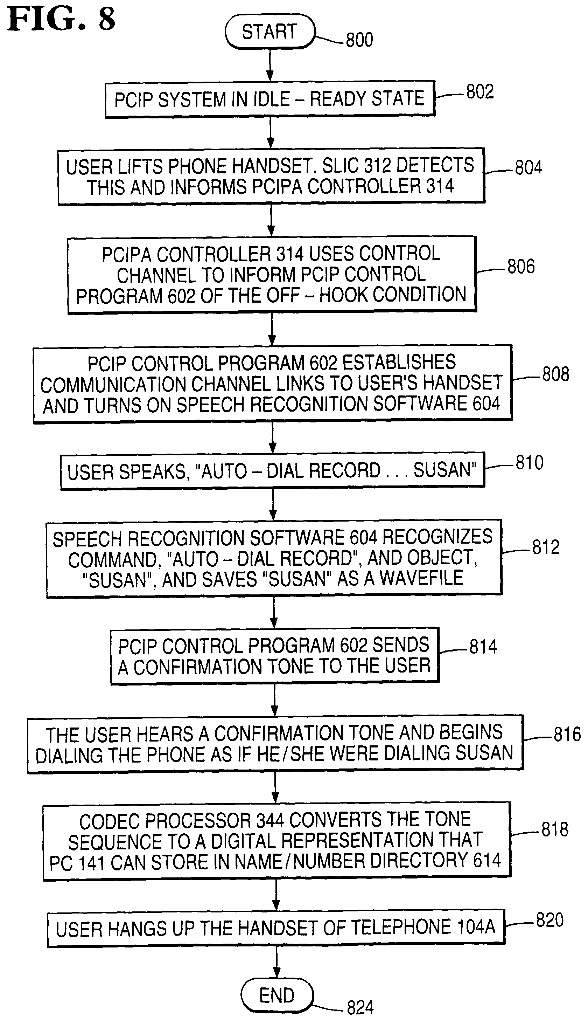

Referring to figure 8, there is shown a flowchart illustrating the steps for a user to execute an auto-dial record operation, which provides a convenient mechanism to add new entries into Name/Number directory 614, in accordance with the present invention. One simple example is provided here to describe one embodiment of the present invention, other variations are possible to the people skilled in the art. In describing the operation shown in figure 8, it is assumed that a user initiates the operation at telephone set 104A equipped with adapter 102A. The other telephone sets (104B, ..., 104N) can also be used to perform the auto-dial record operation.

As shown in Figure 8, in step 802, PCIP system 100 is initially in Idle-Ready State, which means: the PC LED 404 on adapter box 202A is ON (lighted), indicating that PC 141 is on and connected to adapter 102A; PCIPL board 142 is active; relay 310 on adapter 102A is switched to SLIC 312. In this example. it is preferred that relay 310 is initially connected to SLIC 312 because the user should be able to speak commands to the PC immediately after picking up the handset of telephone 104A without speaking over a dialtone sound. Only then can SLIC 312 provide the capability of determining that the handset of telephone 104A has been lifted and that speech recognition software 604 should be initiated on the communication channel. The user always has the option of over-riding the default setting of relay 310 by pressing line button 410, which will result in a normal dialtone condition.

In step 804, the user picks up the handset of telephone 104A, and uses panel 329 on adapter box 202A to verify that the PC LED is ON so that the user knows that he/she can communicate verbally with PC 141 for PCIP related features. (On the other hand, if the user did not want to use the PCIP related features, he/she would press line button 410, see line LED 406 coming on, hear a normal dialtone, and dial the number manually.) At the PCIP adapter circuit level, when the handset is lifted, SLIC 312 detects Off-hook state and signals this state to controller 314.

In step 806, controller 314 forms an information data packet corresponding to this newly generated Off-hook condition. With the embodiment shown in figure 3A, this packet is sent from PCIPA controller 314, through PCIPA control channel circuitry 318, PCIPA high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA controller 314, through PCIPA control channel circuitry 318, PCIPA wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 808, after receiving the "handset change of condition" information packet associated with PCIP adapter 102A, PCIP control program 602 communicates with all PCIP adapters (102A, 102B, ..., 102N) using the control channel, to establish a single bi-directional communication channel between PCIP adapter 102A and PCIPL board 142 (other PCIP adapters, e.g. 102B, ..., 102N, in the system must have their communication channel transmitters turned off). The PCIP control program invokes speech recognition software 604, which then begins monitoring the communication channel to interpret audio to discern known audio patterns.

In step 810, after picking up the handset of telephone 104A, the user may immediately speak his/her request into the handset, for example, "auto-dial record...Susan". (This example assumes that the prior setup activity happens quickly enough that the user does not need to be prompted). With the embodiment shown in figure 3A, this three word audio clip is sent through SLIC 312, PCIPA communication channel circuitry 316, PCIPA high frequency circuitry 320, house phone wire 101, PCIPL high frequency interface circuitry 352, PCIPL communication channel circuitry 348, CODEC processor 344, and to speech recognition software 604 for processing. With the embodiment shown in figure 3D, this three word audio clip is sent through SLIC 312, PCIPA communication channel circuitry 316, PCIPA wireless transmitter and receiver 396, PCIPL wireless transmitter and receiver 398, PCIPL communication channel circuitry 348, CODEC processor 344, and to speech recognition software 604 for processing.

Specifically, at PCIP adapter circuit level, SLIC 312 converts 2-Wire audio from telephone 104A of "auto-dial record...Susan" to appropriately biased audio to send to communication channel circuitry 316. Communication channel circuitry 316 converts analog "auto-dial record...Susan" to a high frequency modulated signal that is transmitted throughout the home on the communication channel which uses house phone wire 101 or wireless carrier.

Communication channel circuitry 348 on PCIPL board 142 recovers the "auto-dial record...Susan" signal and converts it to analog and sends it to CODEC processor 344. The CODEC processor digitizes the audio and passes the wavefile to PC 141 over PC system bus (or PC Internal Bus) for speech recognition processing.

In step 812, after receiving the wavefile, speech recognition software 604 on PC 141 uses algorithms to recognize speech. In this case, speech recognition software recognizes the command "auto-dial record" as a feature invocation and recognizes "Susan" as an object to be saved as a wavefile in SR Vocabulary database 612. PCIP control program 602 makes a corresponding entry in Name/Number directory 614 and waits for the user to provide the telephone number to complete this entry.

In step 814, an acknowledgment tone is sent to the handset of telephone 104A to prompt the user to input Susan's telephone number. To send the acknowledgment tone, PCIP control program 602 causes CODEC processor 344 on PCIPL board 142 to generate the distinctive audio tone. With the embodiment shown in figure 3A, this tone is sent through PCIPL communication channel circuitry 348, PCIPL high frequency interface circuitry 352, house phone wire 101, PCIPA high frequency interface circuitry 320, PCIPA communication channel circuitry 316, SLIC 312, and to the handset of telephone 104A. With the embodiment shown in figure 3D, this tone is sent through PCIPL communication channel circuitry 348, PCIPL wireless transmitter and receiver 398, PCIPA wireless transmitter and receiver 396, PCIPA communication channel circuitry 316, SLIC 312, and to the handset of telephone 104A.

In step 816, after an acknowledgment tone is transmitted to the user, the user begins dialing the touch-tone phone as if he/she were dialing Susan. With the embodiment shown in figure 3A, the audio tones created by the touch-tone phone are transmitted through: SLIC 312, PCIPA communication channel circuitry 316, PCIPA high frequency interface circuitry 320, house phone wire 101, PCIPL high frequency circuitry 352, PCIPL communication channel circuitry 348, and to CODEC processor 344. With the embodiment shown in figure 3D, the audio tones created by the touch-tone phone are transmitted through: SLIC 312, PCIPA communication channel circuitry 316, PCIPA wireless transmitter and receiver 396, PCIPL wireless transmitter and receiver 398, PCIPL communication channel circuitry 348, and to CODEC processor 344.

In step 818, CODEC processor 344 converts the tone sequence to a digital representation that the PC can store in the corresponding entry in Name/Number directory 614.

In step 820, the operation is completed when the user replaces the handset of telephone 104A, SLIC 312 detects and reports the on-hook condition just as it did the off-hook condition. PCIP system 100 returns to Idle-Ready state.

As mentioned above PCIPA location directory 614 stores PCIP adapter's identifications (ID) and respective locations. Whenever a PCIP adapter (102A, 102B, ..., or 102N), which initiates an intercom operation, sends an information data packet to PCIPL board 142, it also sends its own PCIPA ID, together with the information packet. By mapping the ID received from the PCIP adapter into a location in PCIPA location directory 614, PCIP control program 602 can set an audio channel and a control channel for the PCIP adapter.

The databases and data in disk storage 506 can be read into memory storage 504, updated in the memory storage 504, and written back to disk storage 506.

Referring to figure 8, there is shown a flowchart illustrating the steps for a user to execute an intercom operation, which provides a convenient mechanism of voice initiated intercom using PC 141 and the PCIP equipment, in accordance with one embodiment of the present invention. One simple example is provided here to describe one embodiment of the present invention, other variations are possible to the people skilled in the art. In describing the operation shown in figure 7, it is assumed that user1 initiates the intercom at telephone set 104A equipped with adapter 102A. The other telephone sets (104B, ..., 104N) can also be used to perform the intercom operation.

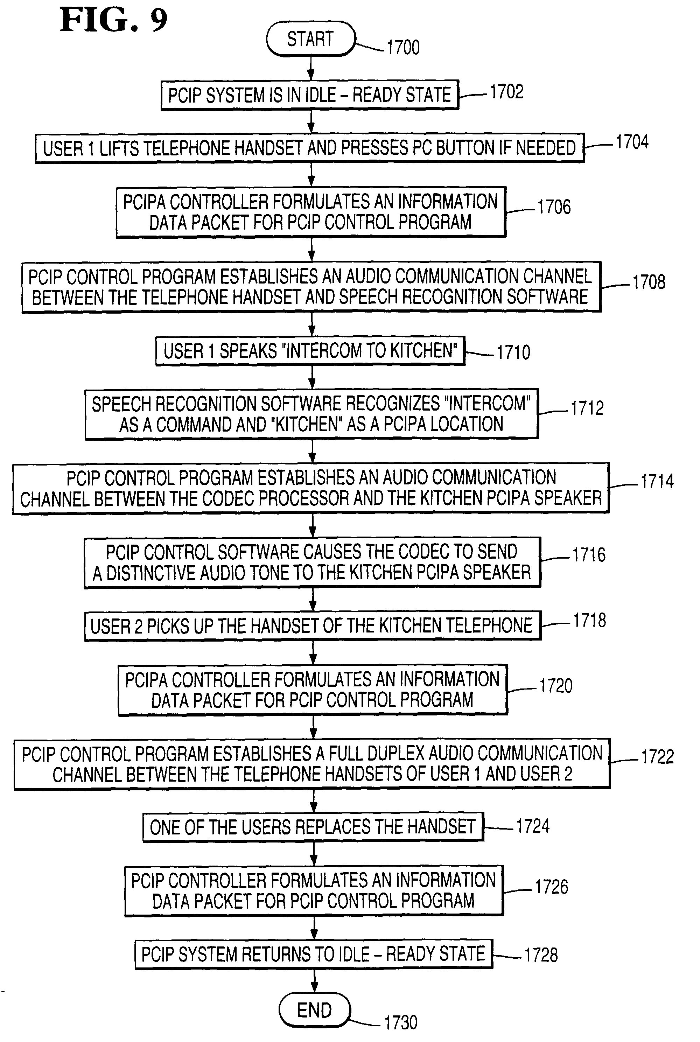

As shown in figure 9, in step 702, PCIP system 100 is initially in an Idle-Ready state, which means: the PC LED 404 on adapter box 202A is ON (lighted), indicating that PC 141 is on and connected to adapter 102A; PCIPL board 142 is active; relay 310 on adapter 102A is switched to SLIC 312. In this example, it is preferred that relay 310 is initially connected to SLIC 312 because the user should be able to speak commands to the PC immediately after picking up the handset of telephone 104A without speaking over a dialtone sound. Only then can SLIC 312 provide the capability of determining that the handset of telephone 104A has been lifted and that speech recognition software 604 should be initiated on the communication channel. The user always has the option of over-riding the default setting of relay 310 by pressing line button 410, which will result in a normal dialtone condition.

In step 704, the user1 picks up the handset of telephone 104A, and uses panel 329 on adapter box 202A to verify that the PC LED is ON so that the user knows that he/she can communicate verbally with PC 141 for the intercom feature. (On the other hand, if the user did not want to use the PCIP related features, he/she would press line button 410, to connect telephone set 104A to telephone line 101.) At the PCIP adapter circuit level, when the handset is lifted, SLIC 312 detects Off-hook state and signals this state to PCIPA(102A) controller 314.

In step 706, PCIPA(102A) controller 314 formulates an information data packet to be sent to PCIP control program 602, corresponding to this newly generated Off-hook condition. With the embodiment shown in figure 3A, this packet is sent from PCIPA(102A) controller 314, through: PCIPA(102A) control channel circuitry 318, PCIPA(102A) high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA(102A) controller 314, through: PCIPA(102A) control channel circuitry 318, PCIPA(102A) wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 708, after receiving the "handset change of condition" information packet associated with PCIP adapter 102A, PCIP control program 602 communicates with all PCIP adapters (102A, 102B, ..., 102N) using the control channel, to establish an audio communication channel between the handset of telephone 104A and speech recognition software 604. Other PCIP adapters, e.g. 102B, ..., 102N, in the system must have their communication channel transmitters turned off. The PCIP control program invokes speech recognition software 604, which then begins monitoring the audio communication channel to interpret audio to discern known audio patterns.

In step 710, after picking up the handset of telephone 104A, user1 may immediately speak his/her request into the handset "Intercom kitchen". (This example assumes that the prior setup activity happens quickly enough that the user does not need to be prompted). With the embodiment shown in figure 3A, this two word audio clip is sent through SLIC 312, PCIPA(102A) communication channel circuitry 316, PCIPA(102A) high frequency interface circuitry 320, house phone wire 101, PCIPL high frequency interface circuitry 352, PCIPL communication channel circuitry 348, CODEC processor 344, and to speech recognition software 604 for processing. With the embodiment shown in figure 3D, this two word audio clip is sent through SLIC 312, PCIPA(102A) communication channel circuitry 316, PCIPA(102A) wireless transmitter and receiver 396, PCIPL wireless transmitter and receiver 398, PCIPL communication channel circuitry 348, CODEC processor 344, and to speech recognition software 604 for processing.

Specifically, at PCIP adapter circuit level, SLIC 312 converts 2-Wire audio from telephone 104A of "Intercom kitchen" to appropriately biased audio to send to PCIPA(102A) communication channel circuitry 316. PCIPA(102A) communication channel circuitry 316 converts analog "Intercom kitchen" to a high frequency modulated signal that is transmitted throughout the home on the communication channel which uses house phone wire 101 or wireless carrier.

Communication channel circuitry 348 on PCIPL board 142 recovers the "Intercom kitchen" signal and converts it to analog and sends it to CODEC processor 344. The CODEC processor digitizes the audio and passes the wavefile to PC 141 over PC system bus (or PC Internal Bus) for speech recognition processing.

The ID information of PCIP adapter 102 is also sent to PC 141 through PCIPL controller 346, via the control channel between PCIP adapter 102A and PCIPL board 142.

In step 712, after receiving the wavefile, speech recognition software 604 on PC 141 uses algorithms to recognize speech. In this case, the speech recognition software recognizes the command "Intercom" as a command and recognizes the lookup object "kitchen" as a PCIPA location. The speech recognition software does a lookup in PCIPA location directory 614 based on the ID information of PCIP adapter 102A, and finds a valid entry, which contains the location information for the PCIP adapter located in the kitchen.

In step 714, after a successful intercom location lookup, PCIP control program 602 establishes an audio communication channel between CODEC processor 344 and the PCIPA speaker in the kitchen. In this example, it is assumed that PCIP adapter 102B is located in the kitchen.

In step 716, PCIP control program 602 causes CODEC processor 344 on PCIPL board 142 to generate a distinctive audio tone, which allows a user to distinguish an intercom call from a telephone call. With the embodiment shown in figure 3A, this tone is sent through PCIPL communication channel circuitry 348, PCIPL high frequency interface circuitry 352, house phone wire 101, PCIPA(102B) high frequency interface circuitry 320, PCIPA(102B) communication channel circuitry 316, and to PCIPA(102B) speaker 308. With the embodiment shown in figure 3D, this tone is sent through PCIPL communication channel circuitry 348, PCIPL wireless transmitter and receiver 398, PCIPA(102B) wireless transmitter and receiver 396, PCIPA(102B) communication channel circuitry 316, and to PCIPA(102B) speaker 308.

In step 718, user2 picks up the telephone handset of the kitchen telephone (104B).

In step 720, PCIPA(102B) controller 314 forms an information data packet to be sent to PCIP control program 602, corresponding to this newly generated Off-hook condition. With the embodiment shown in figure 3A, this packet is sent from PCIPA(102B) controller 314, through: PCIPA(102B) control channel circuitry 318, PCIPA(102B) high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA(102B) controller 314, through: PCIPA(102B) control channel circuitry 318, PCIPA(102B) wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 722, PCIP control program 602 sends a command to establish a full duplex audio communication channel between the telephone handsets of user1 and user2, where the higher communication channel frequency will carry audio from user1 to user2 and the lower communication channel frequency will carry audio from user2 to user1. To co-ordinate the various PCIP adapters such that they transmit and receive on the correct frequencies, the PCIP control program sends out appropriate commands. With the embodiment shown in figure 3A, each command is sent through: PCIPL controller 346 (where the command is converted to a network data packet), PCIPL control channel circuitry 350, PCIPL high frequency interface circuitry 352, house phone wire 101, PCIPA(102A or 102B) high frequency interface circuitry 320, PCIPA(102A or 102B) control channel circuitry 318, and to PCIPA(102A or 102B) controller 314, where the command is used to enable and/or switch the transmit and receive frequencies of the communication channels. With the embodiment shown in figure 3D, this command is sent through: PCIPL controller 346 (where the command is converted to a network data packet), PCIPL control channel circuitry 350, PCIPL wireless transmitter and receiver 398, PCIPA(102A or 102B) wireless transmitter and receiver 396, PCIPA(102A or 102B) control channel circuitry 318, and to PCIPA(102A or 102B) controller 314, where the command is used to enable and/or switch the transmit and receive frequencies of the communication channels.

After step 722 has established the full duplex audio communication channel, user1 and user2 can intercom with each other.

In step 724, one of the two users replaces his/her handset. In this example, it is assumed that user1 replaces the handset of telephone 104A.

In step 726, PCIPA(102A) controller 314 formulates an information data packet to be sent to PCIP control program 602, corresponding to this newly generated On-hook condition. This information data packet is sent to PCIP control program 602 via the control channel, as described in step 706.

In step 728, the PCIP control program sets the PCIP system to Idle-Ready state, in response to the information data packet formulated in step 726.

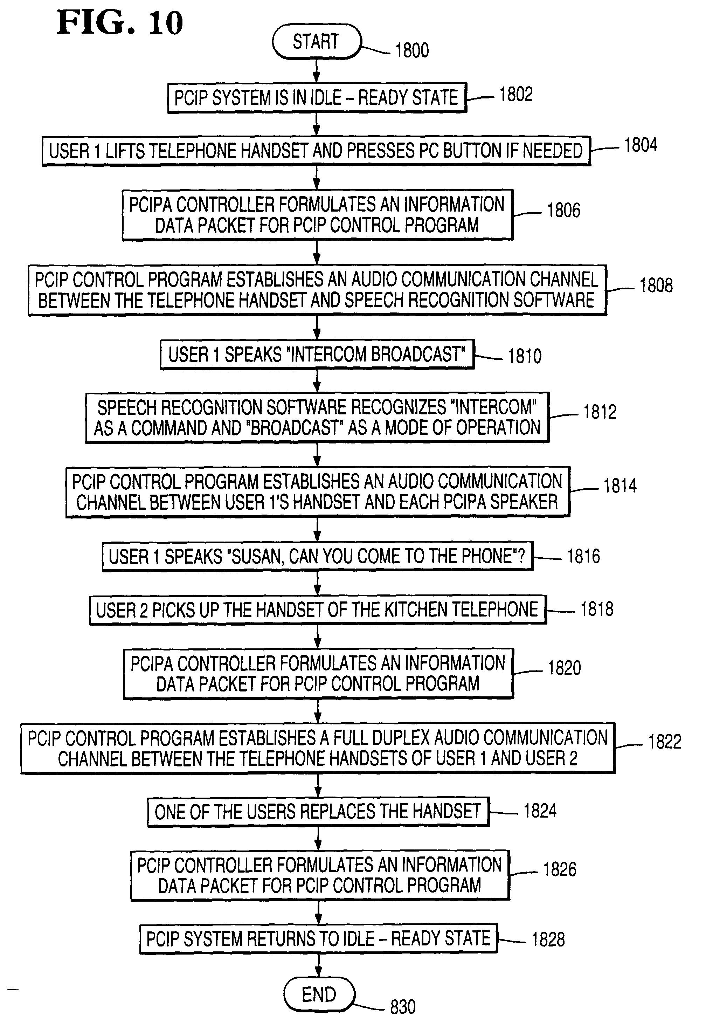

Referring to figure 10, there is shown a flowchart illustrating the steps for a user to initiate an intercom session by using a verbal announcement that can be heard at the speaker of each PCIP adapter box, rather than ringing an individual phone as was described in Figure 9. The ringing mode of operation would be particularly suitable in a situation where it is desired to not disturb others (for example, a small office), whereas the broadcast mode of operation would be more suitable in a situation where location of the called party was not known. Both modes of operation are readily available on command. One simple example is provided here to describe one embodiment of the present invention, other variations are possible to the people skilled in the art. In describing the operation shown in figure 10, it is assumed that user1 initiates the broadcast intercom at telephone set 104A equipped with adapter 102A. The other telephone sets (104B, ..., 104N) can also be used to perform the intercom operation.

As shown in figure 10, in step 802, PCIP system 100 is initially in an Idle-Ready state, which means: the PC LED 404 on adapter box 202A is ON (lighted), indicating that PC 141 is on and connected to adapter 102A; PCIPL board 142 is active; relay 310 on adapter 102A is switched to SLIC 312. In this example, it is preferred that relay 310 is initially connected to SLIC 312 because the user should be able to speak commands to the PC immediately after picking up the handset of telephone 104A without speaking over a dialtone sound. Only then can SLIC 312 provide the capability of determining that the handset of telephone 104A has been lifted and that speech recognition software 604 should be initiated on the communication channel. The user always has the option of over-riding the default setting of relay 310 by pressing line button 410, which will result in a normal dialtone condition.

In step 804, the user1 picks up the handset of telephone 104A, and uses panel 329 on adapter box 202A to verify that the PC LED is ON so that the user knows that he/she can communicate verbally with PC 141 for the intercom feature. (On the other hand, if the user did not want to use the PCIP related features, he/she would press line button 410, to connect telephone set 104A to telephone line 101.) At the PCIP adapter circuit level, when the handset is lifted, SLIC 312 detects Off-hook state and signals this state to PCIPA(102A) controller 314.

In step 806, PCIPA(102A) controller 314 formulates an information data packet to be sent to PCIP control program 602, corresponding to this newly generated Off-hook condition. With the embodiment shown in figure 3A, this packet is sent from PCIPA(102A) controller 314, through: PCIPA(102A) control channel circuitry 318, PCIPA(102A) high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA(102A) controller 314, through: PCIPA(102A) control channel circuitry 318, PCIPA(102A) wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 808, after receiving the "handset change of condition" information packet associated with PCIP adapter 102A, PCIP control program 602 communicates with all PCIP adapters (102A, 102B, ..., 102N) using the control channel, to establish an audio communication channel between the handset of telephone 104A and speech recognition software 604. Other PCIP adapters, e.g. 102B, ..., 102N, in the system must have their communication channel transmitters turned off. The PCIP control program invokes speech recognition software 604, which then begins monitoring the audio communication channel to interpret audio to discern known audio patterns.

In step 810, after picking up the handset of telephone 104A, user1 may immediately speak his/her request into the handset "Intercom broadcast". (This example assumes that the prior setup activity happens quickly enough that the user does not need to be prompted). With the embodiment shown in figure 3A, this two word audio clip is sent through SLIC 312, PCIPA(102A) communication channel circuitry 316, PCIPA(102A) high frequency interface circuitry 320, house phone wire 101, PCIPL high frequency interface circuitry 352, PCIPL communication channel circuitry 348, CODEC processor 344, and to speech recognition software 604 for processing. With the embodiment shown in figure 3D, this two word audio clip is sent through SLIC 312, PCIPA(102A) communication channel circuitry 316, PCIPA(102A) wireless transmitter and receiver 396, PCIPL wireless transmitter and receiver 398, PCIPL communication channel circuitry 348, CODEC processor 344, and to speech recognition software 604 for processing.

Specifically, at PCIP adapter circuit level, SLIC 312 converts 2-Wire audio from telephone 104A of "Intercom broadcast" to appropriately biased audio to send to PCIPA(102A) communication channel circuitry 316. PCIPA(102A) communication channel circuitry 316 converts analog "Intercom broadcast" to a high frequency modulated signal that is transmitted throughout the home on the communication channel which uses house phone wire 101 or wireless carrier.

Communication channel circuitry 348 on PCIPL board 142 recovers the "Intercom broadcast" signal and converts it to analog and sends it to CODEC processor 344. The CODEC processor digitizes the audio and passes the wavefile to PC 141 over PC system bus (or PC Internal Bus) for speech recognition processing.

The ID information of PCIP adapter 102A is also sent to PC 141 through PCIPL controller 346, via the control channel between PCIP adapter 102A and PCIPL board 142.

In step 812, after receiving the wavefile, speech recognition software 604 on PC 141 uses algorithms to recognize speech. In this case, the speech recognition software recognizes the command "Intercom" as a command and recognizes "broadcast" as a mode of operation.

In step 814, PCIP control program 602 establishes an audio communication channel between the handset of telephone 104A and the speakers of the other PCIP adapters(102B, ..., 102N).

In step 816, user1 speaks "Susan, can you come to the phone?" The audio of "Susan, can you come to the phone?" is sent to the speakers of the other PCIP adapters(102B, ..., 102N), via respective audio communication channels.

In step 818, user2 picks up the telephone handset. In this example, it is assumed that PCIP adapter 102B is located in the kitchen, however user2 could pick up the handset of any PCIP-equipped telephone.

In step 820, PCIPA(102B) controller 314 formulates an information data packet to be sent to PCIP control program 602, corresponding to this newly generated Off-hook condition. With the embodiment shown in figure 3A, this packet is sent from PCIPA(102B) controller 314, through: PCIPA(102B) control channel circuitry 318, PCIPA(102B) high frequency interface circuitry 320, house phone wire 101, PCIPL high frequency interface circuitry 352, PCIPL control channel circuitry 350, and to PCIPL controller 346. With the embodiment shown in figure 3D, this packet is sent from PCIPA(102B) controller 314, through: PCIPA(102B) control channel circuitry 318, PCIPA(102B) wireless transmitter and receiver 396, PCIPL wireless transmitter and receiver 398, PCIPL control channel circuitry 350, and to PCIPL controller 346. The PCIPL controller alerts PCIP control program 602 on PC 141 of the off-hook change of state.

In step 822, PCIP control program 602 sends a command to establish a full duplex audio communication channel between the telephone handsets of user1 and user2, where the higher communication channel frequency will carry audio from user1 to user2 and the lower communication channel frequency will carry audio from user2 to user1. To co-ordinate the various PCIP adapters such that they transmit and receive on the correct frequencies, the PCIP control program sends out appropriate commands. With the embodiment shown in figure 3A, each command is sent through: PCIPL controller 346 (where the command is converted to a network data packet), PCIPL control channel circuitry 350, PCIPL high frequency interface circuitry 352, house phone wire 101, PCIPA(102A or 102B) high frequency interface circuitry 320, PCIPA(102A or 102B) control channel circuitry 318, and to PCIPA(102A or 102B) controller 314, where the command is used to enable and/or switch the transmit and receive frequencies of the communication channels. With the embodiment shown in figure 3D, this command is sent through: PCIPL controller 346 (where command is converted to a network data packet), PCIPL control channel circuitry 350, PCIPL wireless transmitter and receiver 398, PCIPA(102A or 102B) wireless transmitter and receiver 396, PCIPA(102A or 102B) control channel circuitry 318, and to PCIPA(102A or 102B) controller 314, where the command is used to enable and/or switch the transmit and receive frequencies of the communication channels.

After step 822 has established the full duplex audio communication channel, user1 and user2 can intercom with each other.

In step 824, one of the two users replaces his/her handset. In this example, it is assumed that user1 replaces the handset of telephone 104A.

In step 826, PCIPA(102A) controller 314 formulates an information data packet to be sent to PCIP control program 602, corresponding to this newly generated On-hook condition. This information data packet is sent to PCIP control program 602 via the control channel, as described in step 806.

In step 828, the PCIP control program sets the PCIP system to Idle-Ready state, in response to the information data packet formulated in step 826.

It should be noted that the embodiments in the present invention are described in a home environment, they can be readily used in other environments within the scope of the present invention, such as a small office environment for example.

## Claims

1. Communication system control apparatus characterized in that the apparatus includes means [202A....202N] for coupling to a communication device [104A....104N] of the system and means [141,604,602] to exercise control of system operation in response to a speech command to the device.

2. Apparatus according to Claim 1, characterized in that the communication device is a telephone and in that the apparatus includes a converter circuit [102A....102N] responsive to a speech command to convert [316] the speech command to a command signal and a processing unit [604] to recognize the speech command in the command signal and generate [602] the corresponding control signal.

3. Apparatus according to Claim 1 or Claim 2, characterized in that the speech command is exemplified by a specific number to be dialled, the identity of a person or organisation or location to which telephonic connection is required and an activity required of the telephone instrument or connected equipment.

4. Apparatus according to any one of the preceding Claims, characterized in that the speech command is an oral dialing or intercom command.

5. Apparatus according to any one of the preceding Claims, characterized in that the communication device has a coupling for a communication line [101] to carry communication signals from and to a communication network.

6. Apparatus according to any one of the preceding Claims when dependent on Claim 2 characterized in that there is an interface circuit coupled to the communication device and including the converter circuit and a transmitter circuit [320] for sending said command signal together with a controller [346] including a receiver circuit [352] for receiving said transmitted command signal and the processing unit.

7. Apparatus according to Claim 6 when dependent on Claim 5, characterized in that the interface circuit and controller are coupled to the communication line.

8. Apparatus according to Claim 7, characterized in that the command signal is sent via the communication line without interfering with said communication signals.

9. Apparatus according to Claim 7, characterized in that intercom action over the communication line does not interfere with said communication signals.

10. Apparatus according to Claim 5 or any claim dependent thereon characterized in that the controller includes a transmitter circuit for sending the control signal to the communication network via the communication line [101].

11. Apparatus according to Claim 6 or any claim dependent thereon characterized in that the interface transmitter circuit sends the control signal to the controller via a wireless medium [396,397,398,399].

12. Apparatus according to Claim 1, characterized in that the apparatus comprises:
(a) a converter circuit [102A....102N] for converting a speech command, received from the communication device,
(b) a modulator circuit [316] for modulating the speech command, and
(c) a transmitter circuit [320] for sending said modulated speech command.

13. Apparatus according to Claim 1, characterized in that the apparatus comprises:
(a) a receiver circuit for receiving a speech command,
(b) a converter circuit [102A....102N] for converting the speech command into digital format,
(c) a processor logic [604] for recognising the speech command in digital format, and for generating [602] a control signal to control the communication system in response to said recognised speech command.

14. A system for controlling the operation of a communication system from a plurality of local communication devices [104A....104N] characterized by
(a) a plurality of interface circuits [202A....202N], with each of said interface circuits being coupled to its respective communication device, each of said interface circuits including:-
(1) a converter circuit [102A....102N] for converting a speech command, received from the first communication device, into a command signal;
(2) a transmitter circuit [320] for sending said command signal; and
(b) a controller [346], including:
(1) a receiver circuit [352] for receiving said command signal; and
(2) a processing unit [604] for recognising the speech command in the command signal and for generating [602] a control signal to control the operation of the communication system in response to said recognised speech command.

15. In using with a system including a controller [346], a communication device [104A....104N] and an interface circuit coupled to the communication device, a method for controlling the operation of a communication system characterized by the following steps:
(a) at the interface circuit,
(1) converting [102A....102N] a speech command, received from the communication device, into a command signal;
(2) sending said command signal; and
(b) at the controller [346],
(1) receiving [352] said command signal;
(2) recognising [604] said speech command in said command signal, and generating [602] a control signal to control the operation of the communication system in response to said recognised speech command.

16. A method for performing an intercom connection between a first and a second communication device characterized by performing the connection under the control of a communication controller [346], the first communication device [104A....104N] being coupled to an interface circuit, by the following steps:
(a) at the interface circuit:
(1) converting [102A....102N] an oral intercom command, received from the communication device, to a command signal;
(2) sending said command signal; and
(b) at the communication controller [346],
(1) receiving [352] said command signal; and
(2) connecting the first communication device to the second communication device in response to said command signal, so that the first and second communication devices can communicate with each other.

17. In using with a system including a controller, a local communication device and an interface circuit coupled to the local communication device, a method for performing an auto dialing to a remote communication device characterized by the following steps:
(a) at the interface circuit,
(1) converting [102A....102N] an oral dialing command to the remote communication device [110A....110M], received from the local communication device [104A....104N], into a command signal;
(2) sending said command signal; and
(b) at the controller [346],
(1) receiving [352] said command signal;
(2) generating a dialing signal associating with said remote communication device in response to said recognised command signal.

18. An apparatus for creating an audio dialling directory for a local communication device characterized by:
(a) an interface coupled to said communication device including:
(1) a converter circuit [102A....102N] for converting an oral dialling name and an associated dialling identification, received from the local communication device, into a command signal;
(2) a transmitter circuit [320] for sending said command signal; and
(b) a controller [346], including:
(1) a receiver circuit [352] for receiving said control command;
(2) a processing unit [604] for processing said oral dialling name and associated dialling identification into digital format; and
(3) a storage medium [506] for storing said oral name and associated identification in the digital format.
